# EUROPEAN PATENT APPLICATION

(11) **EP 4 793 117 A1**
(43) Date of publication of application: **19.08.2026**
(21) Application number: 26157994.0
(22) Date of filing: 11.02.2026
(51) Int. Cl.: B60T 8/32

(54) **METHOD FOR RELIEVING FORWARD LEANING DURING BRAKING OF VEHICLE, CONTROLLER, AND VEHICLE**

(30) Priority: 14.02.2025 CN 202510169168
(71) Applicant: Huawei Technologies Co., Ltd., Shenzhen, Guangdong 518129 (CN)
(72) Inventor: SUN, Mingjun, Shenzhen, 518129 (CN); NING, Yu, Shenzhen, 518129 (CN); CHEN, Haiyan, Shenzhen, 518129 (CN); YE, Shaoxi, Shenzhen, 518129 (CN); LI, Lu, Shenzhen, 518129 (CN)
(74) Representative: Gill Jennings & Every LLP

(57) **Abstract**

This application provides a method for relieving forward leaning during braking of a vehicle, a controller, and a vehicle, and is applied to the field of electric vehicle technologies, to improve comfort in a vehicle braking process. In the method for relieving forward leaning during braking, when a deceleration of the vehicle is less than a preset deceleration at a first moment at a final braking stage during forward traveling of the vehicle, a braking torque output by an electronic mechanical brake apparatus is controlled to be less than a braking torque indicated by a brake pedal stroke of the vehicle. Therefore, when the deceleration of the vehicle at the final braking stage is small, the deceleration of the vehicle can be further appropriately decreased by actively decreasing the braking torque output by the electronic mechanical brake apparatus, to relieve forward leaning caused by a sudden change of an excessively large deceleration of the vehicle at the final braking stage, and improve driving and ride comfort.

## Description

### TECHNICAL FIELD

This application relates to the field of electric vehicle technologies, and in particular, to a method for relieving forward leaning during braking of a vehicle, a controller, and a vehicle.

### BACKGROUND

In recent years, with popularization of electric vehicles, functions of electric vehicles are increasingly improved to enhance user experience. In particular, at a final braking stage of an electric vehicle, the electric vehicle rebounds due to action of a vehicle body and a chassis suspension when the electric vehicle stops, and a body of a passenger leans forward due to a deceleration, causing discomfort. To relieve forward leaning during braking for a more comfortable braking experience, in a braking process of the electric vehicle, a common manner is to control, based on a vehicle speed of the electric vehicle, a speed of the electric vehicle to brake. However, there is a large error in controlling, based on the vehicle speed, the electric vehicle to brake, and operability is low. Consequently, braking comfort is still affected. Therefore, a solution needs to be urgently provided to resolve the foregoing problem.

### SUMMARY

This application provides a method for relieving forward leaning during braking of a vehicle, a controller, and a vehicle, to relieve forward leaning amplitudes of a driver and a passenger when a vehicle is braked to stop at a final braking stage of non-emergency braking, and improve braking comfort.

To achieve the foregoing objective, this application provides the following technical solutions.

According to a first aspect, this application provides a method for relieving forward leaning during braking of vehicle. The method for relieving forward leaning during braking is used to control an electronic mechanical brake apparatus of the vehicle to output a braking torque at a final braking stage during traveling of the vehicle. The method for relieving forward leaning during braking includes: a deceleration of the vehicle is less than or equal to a first preset deceleration and a vehicle speed of the vehicle is less than or equal to a first preset vehicle speed at a first moment, controlling the electronic mechanical brake apparatus to output a first braking torque, where the first braking torque is less than a braking torque indicated by a brake pedal stroke of the vehicle at the first moment.

A larger deceleration of the vehicle at the final braking stage of non-emergency braking is more likely to cause forward leaning of a driver and a passenger. According to the method for relieving forward leaning during braking provided in this application, when the deceleration of the vehicle is less than or equal to the first preset deceleration and the vehicle speed of the vehicle is less than or equal to the first preset vehicle speed at the first moment, controlling the first braking torque output by the electronic mechanical brake apparatus to be less than the braking torque indicated by the brake pedal stroke of the vehicle at the first moment can appropriately decrease the deceleration of the vehicle at the final braking stage, so that a speed of a vehicle body and a speed of a chassis can be kept synchronous. This relieves forward leaning of the driver and the passenger caused by a sudden change of the deceleration when the vehicle is braked to stop, and improves braking comfort.

In an implementation, the method for relieving forward leaning during braking further includes: the brake pedal stroke of the vehicle is increased after the first moment, and the vehicle speed of the vehicle is less than or equal to a second preset vehicle speed at a second moment after the first moment, controlling the electronic mechanical brake apparatus to output a second braking torque, where the second braking torque is equal to a braking torque indicated by the brake pedal stroke at the second moment, and the second preset vehicle speed is less than the first preset vehicle speed.

The increase of the brake pedal stroke indicates that a braking torque output by a brake motor in the electronic mechanical brake apparatus needs to be increased. However, the increase of the braking torque output by the brake motor may cause forward leaning of the driver and the passenger when the vehicle is braked to stop. If the vehicle speed of the vehicle is less than the second preset vehicle speed after the braking torque output by the electronic mechanical brake apparatus of the vehicle is actively decreased, it indicates that the vehicle is close to stopping. In this case, the braking torque output by the electronic mechanical brake apparatus is recovered to the braking torque indicated by the brake pedal stroke, so that the vehicle can be braked to stop in time, forward leaning of the driver and the passenger is not easily caused, ensuring normal output of a braking force during stopping.

In an implementation, the method for relieving forward leaning during braking further includes: controlling, at any moment between the first moment and the second moment, the electronic mechanical brake apparatus to output a braking torque equal to the first braking torque, or controlling, at any moment between the first moment and the second moment, the electronic mechanical brake apparatus to output a braking torque greater than the first braking torque and less than a braking torque indicated by the brake pedal stroke at a corresponding same moment.

After the brake pedal stroke is increased in a process in which the vehicle is approximately braked to stop to final braking, the braking torque output by the electronic mechanical brake apparatus may be constant to the first braking torque, or may be greater than the first braking torque but less than the braking torque indicated by the brake pedal stroke. Therefore, braking comfort is improved, and the braking torque output by the electronic mechanical brake apparatus can be controlled based on an actual requirement. This simplifies control of a braking torque.

In an implementation, the method for relieving forward leaning during braking further includes: a traveling distance of the vehicle from the first moment to a third moment is greater than a first preset distance, controlling, at the third moment after the first moment and before the second moment, the electronic mechanical brake apparatus to increase the output braking torque.

If the traveling distance from the first moment to the third moment is greater than the first preset distance, it indicates that a braking distance of the vehicle is excessively long. In this case, increasing the braking torque output by the electronic mechanical brake apparatus can increase the deceleration of the vehicle, to decrease the braking distance of the vehicle, and enhance braking safety.

In an implementation, the method for relieving forward leaning during braking further includes: the deceleration of the vehicle is less than or equal to a second preset deceleration at a fourth moment after the first moment and before the second moment, controlling the braking torque output by the electronic mechanical brake apparatus to be equal to a braking torque indicated by the brake pedal stroke at the fourth moment, where the second preset deceleration is less than or equal to the first preset deceleration.

When the deceleration of the vehicle is very small, braking does not cause forward leaning of the driver and the passenger. In this case, the braking torque output by the electronic mechanical brake apparatus can be recovered to brake the vehicle to stop in time.

In an implementation, the method for relieving forward leaning during braking further includes: the vehicle speed of the vehicle is greater than the first preset vehicle speed at the first moment, controlling the braking torque output by the electronic mechanical brake apparatus to be equal to the braking torque indicated by the brake pedal stroke of the vehicle at the first moment.

When the vehicle speed of the vehicle is greater than the first preset vehicle speed, it indicates that the vehicle speed of the vehicle is large. In this case, the braking torque output by the electronic mechanical brake apparatus is equal to the braking torque indicated by the brake pedal stroke of the vehicle at the first moment, to enhance driving safety.

In an implementation, the method for relieving forward leaning during braking further includes: a change rate of the brake pedal stroke is greater than a first preset change rate at any moment between the first moment and the second moment, controlling the braking torque output by the electronic mechanical brake apparatus to be equal to the braking torque indicated by the brake pedal stroke at the first moment.

The change rate of the brake pedal stroke being greater than the first preset change rate at any moment between the first moment and the second moment indicates that the vehicle needs to perform emergency braking. In this case, controlling the braking torque output by the electronic mechanical brake apparatus to be equal to the braking torque indicated by the brake pedal stroke of the vehicle at the first moment can quickly increase a braking force of the vehicle, to quickly brake the vehicle to stop, and avoid a safety accident.

In an implementation, the method for relieving forward leaning during braking further includes: a change rate of the brake pedal stroke is greater than a first preset change rate at the first moment, controlling the braking torque output by the electronic mechanical brake apparatus to be equal to the braking torque indicated by the brake pedal stroke at the first moment.

The change rate of the brake pedal stroke being greater than the first preset change rate at the first moment indicates that the vehicle needs to perform emergency braking. In this case, controlling the braking torque output by the electronic mechanical brake apparatus to be equal to the braking torque indicated by the brake pedal stroke of the vehicle at the first moment can quickly increase a braking force of the vehicle, to quickly brake the vehicle to stop, and avoid a safety accident.

In an implementation, the method for relieving forward leaning during braking further includes: the vehicle is in an uphill condition and a gradient of a road surface on which the vehicle travels is greater than a first preset gradient, controlling, at the first moment, the first braking torque to be inversely proportional to the gradient of the road surface; or the vehicle is in a downhill condition and the gradient of the road surface on which the vehicle travels is greater than a second preset gradient, controlling, at the first moment, the first braking torque to be directly proportional to the gradient of the road surface.

When the vehicle travels uphill, a weight of the vehicle provides a gravity component opposite to a traveling direction for the vehicle. When the gradient of the road surface is excessively large, the gravity component provided by the weight of the vehicle causes an excessively large deceleration of the vehicle, causing the vehicle to decelerate excessively fast, and causing forward leaning of the driver and the passenger. When the vehicle is in the uphill condition, decreasing the braking torque output by the electronic mechanical brake apparatus can avoid an increase of the deceleration of the vehicle, to avoid forward leaning of the driver and the passenger at the final braking stage.

When the vehicle travels downhill, the weight of the vehicle provides a gravity component the same as a traveling direction of the vehicle. When the gradient of the road surface is excessively large, the gravity component provided by the weight of the vehicle causes an excessively fast decrease of the deceleration of the vehicle. As a result, the braking distance of the vehicle is increased. When the vehicle is in the downhill condition, increasing the braking torque output by the electronic mechanical brake apparatus can avoid an excessively fast decrease of the deceleration of the vehicle, to control the braking distance of the vehicle.

In an implementation, the method for relieving forward leaning during braking further includes: a slip rate of a wheel of the vehicle is less than a first preset slip rate, controlling, at the first moment, the first braking torque to be directly proportional to the slip rate of the wheel; or the slip rate of the wheel of the vehicle is greater than or equal to the first preset slip rate, controlling, at the first moment, the braking torque output by the electronic mechanical brake apparatus to be equal to the braking torque indicated by the brake pedal stroke at the first moment.

The slip rate of the wheel being less than the first preset slip rate indicates that the vehicle travels on a high-adhesion road surface. In this case, the braking torque output by the electronic mechanical brake apparatus is directly proportional to the slip rate of the wheel, so that the braking torque output by the electronic mechanical brake apparatus can be adjusted in time, and wheel slip can be limited. The slip rate of the wheel of the vehicle being greater than or equal to the first preset slip rate indicates that the vehicle travels on a low-adhesion road surface. In this case, the braking torque output by the electronic mechanical brake apparatus is equal to the braking torque indicated by the brake pedal stroke at the first moment, so that excessive wheel slip can be avoided.

In an implementation, the method for relieving forward leaning during braking further includes: the vehicle is in a traveling condition after the second moment, and a left steering angle of a steering wheel of the vehicle is greater than a first preset steering angle at a fifth moment after the second moment, controlling a braking torque output by an electronic mechanical brake apparatus on a left side of the vehicle to be greater than a braking torque output by an electronic mechanical brake apparatus on a right side of the vehicle.

The left steering angle of the steering wheel of the vehicle being greater than the first preset angle indicates that the vehicle needs to steer left. In this case, the braking torque output by the electronic mechanical brake apparatus on the left side of the vehicle is greater than the braking torque output by the electronic mechanical brake apparatus on the right side of the vehicle, so that a rotation speed of a right wheel is greater than a rotation speed of a left wheel, to provide a left steering torque for the vehicle, and help the vehicle steer more quickly.

In an implementation, the method for relieving forward leaning during braking further includes: the vehicle is in a reverse braking condition after the fifth moment, and the deceleration of the vehicle is less than or equal to a third preset deceleration and the vehicle speed of the vehicle is less than a third preset vehicle speed at a sixth moment after the fifth moment, controlling a third braking torque output by the electronic mechanical brake apparatus, where the third braking torque is less than a braking torque indicated by the brake pedal stroke at the sixth moment and is greater than the first braking torque.

The deceleration of the vehicle being less than or equal to the third preset deceleration and the vehicle speed of the vehicle being less than the third preset vehicle speed in a reverse process of the vehicle indicates that the vehicle is at a final braking stage of reverse braking. In this case, the third braking torque output by the electronic mechanical brake apparatus is less than the braking torque indicated by the brake pedal stroke, so that the deceleration of the vehicle can be decreased, to perform comfortable braking on the vehicle. The third braking torque is greater than the first braking torque, so that it can be ensured that a deceleration during comfortable braking at a final braking stage of reverse traveling is greater than a deceleration during comfortable braking at a final braking stage of forward traveling, to decrease a braking distance during comfortable reverse braking, and improve safety of comfortable reverse braking.

In an implementation, when the vehicle is in the reverse condition, the method for relieving forward leaning during braking further includes: the deceleration of the vehicle is less than a fourth preset deceleration at a seventh moment after the sixth moment, controlling the braking torque output by the electronic mechanical brake apparatus to be equal to a braking torque indicated by the brake pedal stroke at the seventh moment.

In a non-emergency braking process of reverse traveling, the deceleration of the vehicle being less than the fourth preset deceleration indicates that the vehicle is close to stopping at the final braking stage. In this case, the braking torque output by the electronic mechanical brake apparatus is equal to the braking torque indicated by the brake pedal stroke, so that the deceleration of the vehicle can be increased, to brake the vehicle to stop more quickly, and avoid an excessively long braking distance. In addition, the fourth preset deceleration used as a determining threshold in the reverse braking condition is greater than the second preset deceleration, so that the braking torque output by the electronic mechanical brake apparatus can be increased earlier, to further decrease a braking distance at the final braking stage of reverse traveling, and improve safety of comfortable braking of the vehicle in reverse traveling.

According to a second aspect, this application provides a controller. The controller is configured to implement the method for relieving forward leaning during braking in any implementation of the first aspect. The controller is configured to: communicatively connect to an electronic mechanical brake apparatus of a vehicle, and control a brake motor of the electronic mechanical brake apparatus to output a braking torque.

According to a third aspect, this application provides a vehicle. The vehicle performs braking control by using the method for relieving forward leaning during braking in any implementation of the first aspect.

For technical principles and technical effects of the second aspect and the third aspect, refer to the descriptions of the first aspect. Details are not described herein again in this application.

### BRIEF DESCRIPTION OF DRAWINGS

FIG. 1 is a diagram of an electric vehicle according to an embodiment of this application;
FIG. 2 is another diagram of an electric vehicle according to an embodiment of this application;
FIG. 3 is a diagram of a brake system according to an embodiment of this application;
FIG. 4 is a diagram of an electronic mechanical brake apparatus according to an embodiment of this application;
FIG. 5 is a diagram of a braking control process of an electric vehicle according to an embodiment of this application;
FIG. 6 is another diagram of a braking control process of an electric vehicle according to an embodiment of this application;
FIG. 7 is another diagram of a braking control process of an electric vehicle according to an embodiment of this application; and
FIG. 8 is another diagram of a braking control process of an electric vehicle according to an embodiment of this application.

### DESCRIPTION OF EMBODIMENTS

In this application, "in an embodiment" indicates an example, an illustration, or an explanation. A solution described as "in an embodiment" in this application should not be construed as being more preferred or advantageous than solutions in other embodiments. Specifically, "in an embodiment" is intended to present the inventive concept of this application in a specific manner.

With development of electric vehicles, driving and ride experience of the electric vehicles is increasingly concerned, and braking performance of the electric vehicles is a key factor affecting the driving and ride experience of the electric vehicles. In a braking process of an electric vehicle, a final braking stage is a process of a vehicle speed of the electric vehicle from very small to zero, that is, a process in which the electric vehicle is about to stop to completely stop and has no relative motion on the ground. In the braking process of the electric vehicle, under action of a deceleration, a suspension of the vehicle is compressed. After braking of the electric vehicle ends, although the electric vehicle has actually stopped, a body of the electric vehicle rebounds under action of the suspension. In this case, the electric vehicle shakes, affecting driving and ride experience.

When the electric vehicle is braked, braking of the electric vehicle includes emergency braking and non-emergency braking. Emergency braking is a process of decelerating the electric vehicle to stop within a shortest distance in extremely short time. In an emergency braking process, a deceleration of the electric vehicle is large, so that the electric vehicle can be quickly braked to stop within a shortest distance. A non-emergency braking process is a process of controlling the electric vehicle to slowly decelerate to stop in long time. In the non-emergency braking process, a deceleration of the electric vehicle is small, so that the electric vehicle can be slowly braked to stop within a longer braking distance.

At a final braking stage in which the electric vehicle performs non-emergency braking, to reduce shaking of the electric vehicle to make a braking process more comfortable, in some related technologies, the deceleration of the electric vehicle is decreased by reducing a hydraulic pressure of a hydraulic brake system at the final braking stage. However, in the foregoing solution, a hydraulic braking force of the hydraulic brake system is usually controlled based on a wheel speed detected by a wheel speed sensor. As a result, a control occasion cannot be accurately determined, and driving and ride experience is still affected.

To resolve the foregoing problem, embodiments of this application provide a method for relieving forward leaning during braking of a vehicle, a controller, and a vehicle. In the method for relieving forward leaning during braking of a vehicle provided in embodiments of this application, in a process in which non-emergency braking is performed when the vehicle is traveling, when a deceleration of the vehicle is less than or equal to a first preset deceleration and a vehicle speed of the vehicle is less than a first preset vehicle speed, an electronic mechanical brake apparatus is actively controlled to output a braking torque less than a braking torque indicated by a brake pedal stroke of the vehicle, to further decrease the deceleration of the vehicle, so as to reduce a forward leaning feeling generated when the vehicle stops, and improve driving and ride experience.

The following describes, with reference to accompanying drawings, the technical solutions of embodiments in this application by using as an example in which the vehicle is an electric vehicle 10.

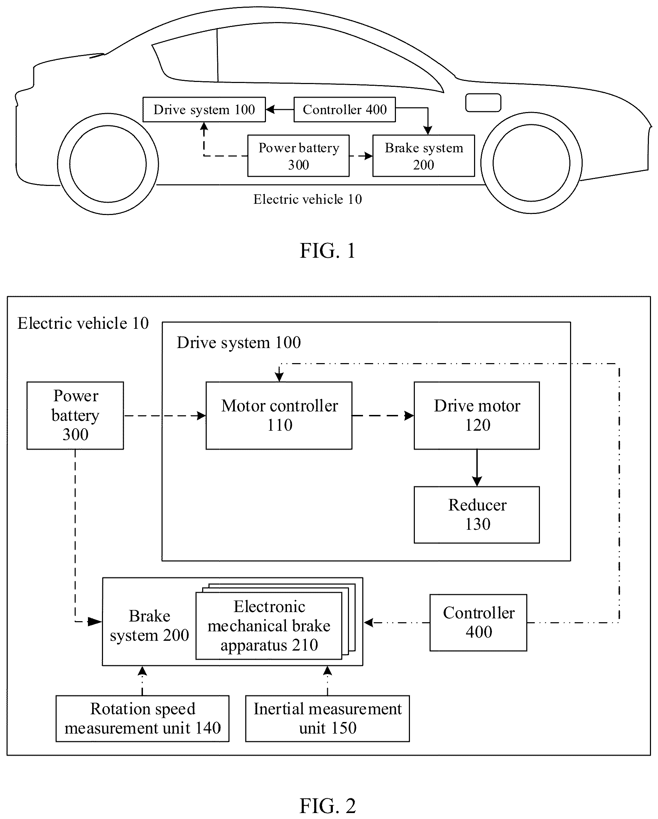

FIG. 1 is a diagram of an electric vehicle according to an embodiment of this application. As shown in FIG. 1, the electric vehicle 10 usually includes a drive system 100, a brake system 200, a power battery 300, and a controller 400. The drive system 100, the brake system 200, and the controller 400 are usually communicatively connected and exchange signals through a communication bus. The communication bus includes a controller area network (controller area network, CAN) bus, a local interconnect network (local interconnect network, LIN) bus, a high-speed fault-tolerant network protocol (flexray), or another type of bus. This is not limited herein. In addition, the drive system 100 is configured to drive wheels of the electric vehicle 10 to rotate, to drive the electric vehicle 10 to travel. The brake system 200 is configured to brake the wheels of the electric vehicle 10 to slow down the electric vehicle 10. The power battery 300 is configured to supply power to the drive system 100, the brake system 200, the controller 400, and the like.

The power battery 300 in this embodiment of this application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like. This is not limited herein. In terms of a scale, the power battery 300 in this embodiment of this application may be an individual cell, or may be a battery module or a battery pack. This is not limited herein. The power battery 300 may further supply power to another power-consuming device in the electric vehicle 10, for example, supply power to an in-vehicle air conditioner or a vehicle-mounted player.

FIG. 2 is another diagram of the electric vehicle according to an embodiment of this application. As shown in FIG. 2, in an embodiment, the drive system 100 includes a motor controller 110, a drive motor 120, and a reducer 130. The motor controller 110 is configured to: receive a direct current output by the power battery 300, and output an alternating current to control the drive motor 120 to output a driving torque. The drive motor 120 drives wheels of the electric vehicle 10 through the reducer 130.

In an embodiment, the electric vehicle 10 further includes a rotation speed measurement unit 140. As shown in FIG. 2, the rotation speed measurement unit 140 is configured to detect a rotation speed of the drive motor 120 of the electric vehicle 10. The controller 400 can calculate a vehicle speed of the electric vehicle 10 based on the rotation speed of the drive motor 120 detected by the rotation speed measurement unit 140, and actively adjust, in a braking process based on the vehicle speed of the electric vehicle 10, a braking torque output by a brake motor in the electronic mechanical brake apparatus 210. The rotation speed measurement unit 140 may be a resolver. The resolver can detect the rotation speed of the drive motor more quickly and accurately, to calculate the vehicle speed of the electric vehicle.

In an embodiment, still as shown in FIG. 2, the electric vehicle 10 further includes an inertial measurement unit 150 (inertial measurement unit, IMU). The inertial measurement unit 150 can detect a deceleration of the electric vehicle 10. The controller 400 can actively adjust, based on the deceleration of the electric vehicle 10 detected by the inertial measurement unit 150, a braking torque output by a brake motor in the electronic mechanical brake apparatus 210, to implement a function for relieving forward leaning during braking of the electric vehicle 10 at a final braking stage.

In an embodiment, still as shown in FIG. 2, the rotation speed measurement unit 140 and the inertial measurement unit 150 are communicatively connected to the controller 400 through the brake system 200. Certainly, the rotation speed measurement unit 140 and the inertial measurement unit 150 may alternatively be directly communicatively connected to the controller 400 through a communication bus, or may be communicatively connected to the controller 400 through the drive system 100.

The brake system 200 includes a plurality of electronic mechanical brake apparatuses 210. The controller 400 can control, based on a brake pedal stroke, a braking torque output by a brake motor in the electronic mechanical brake apparatus 210. The brake pedal stroke is a physical stroke when a driver actively steps on a brake pedal or a brake pedal electronic stroke signal output by an autonomous driving system.

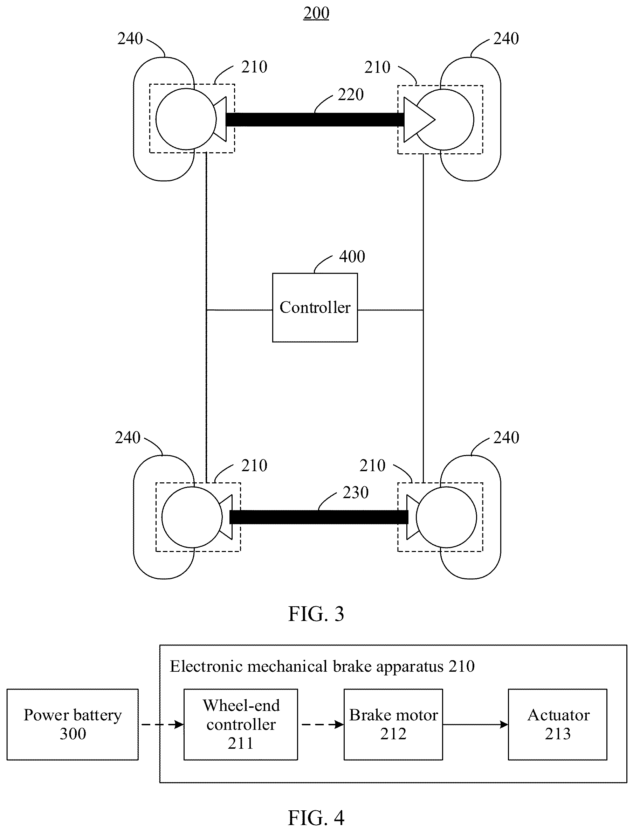

FIG. 3 is a diagram of the brake system according to an embodiment of this application. As shown in FIG. 3, the electric vehicle 10 includes four wheels 240. The brake system 200 generally includes four electronic mechanical brake apparatuses 210. The four electronic mechanical brake apparatuses 210 are respectively configured to brake the four wheels 240 of the electric vehicle 10. Each electronic mechanical brake apparatus 210 is configured to brake one wheel 240 of the electric vehicle 10.

In an embodiment, two wheels 240 corresponding to a front axle 220 of the electric vehicle 10 are a left front wheel FL and a right front wheel FR, and two wheels 240 corresponding to a rear axle 230 of the electric vehicle 10 are a left rear wheel RL and a right rear wheel RR. Two electronic mechanical brake apparatuses 210 are respectively configured to brake the left front wheel FL and the right front wheel FR of the electric vehicle 10, and the other two electronic mechanical brake apparatuses 210 are respectively configured to brake the left rear wheel RL and the right rear wheel RR of the electric vehicle 10.

As shown in FIG. 3, the electric vehicle 10 includes one or more controllers 400. After the driver steps on the brake pedal or the autonomous driving system automatically outputs the brake pedal electronic stroke signal, the controller 400 sends a braking signal to the electronic mechanical brake apparatus 210 to control the brake motor in the electronic mechanical brake apparatus 210 to output the braking torque, so as to brake a corresponding wheel. In this embodiment of this application, each controller 400 is configured to output a braking signal to control one or more electronic mechanical brake apparatuses 210.

In an embodiment, the electronic mechanical brake system 200 includes one controller 400 and four electronic mechanical brake apparatuses 210. After the driver steps on the brake pedal, the controller 400 controls the four electronic mechanical brake apparatuses 210 to brake the four wheels 240 of the electric vehicle 10 respectively.

In an embodiment, the electronic mechanical brake system 200 includes two controllers 400 and four electronic mechanical brake apparatuses 210. After the driver steps on the brake pedal, one controller 400 controls two electronic mechanical brake apparatuses 210 to brake the two front wheels of the electric vehicle 10, and the other controller 400 controls the other two electronic mechanical brake apparatuses 210 to brake the two rear wheels of the electric vehicle 10.

In an embodiment, the electronic mechanical brake system 200 includes four controllers 400 and four electronic mechanical brake apparatuses 210. After the driver steps on the brake pedal, the four controllers 400 respectively control the four electronic mechanical brake apparatuses 210 to brake the four wheels 240 of the electric vehicle.

In an embodiment, when the electric vehicle 10 is braked, the drive motor 120 can further generate, in a process in which the wheel rotate, a torque opposite to a rotation speed direction of the wheel, to perform regenerative braking. When regenerative braking is performed, the torque that is output by the drive motor 120 and that is opposite to the rotation speed direction of the wheel is decreased as a vehicle speed is decreased, so that a deceleration of the electric vehicle 10 is gradually decreased. In addition, when the vehicle speed of the electric vehicle 10 is decreased, wind resistance of the electric vehicle 10 and the like is also decreased, so that the deceleration of the electric vehicle 10 is decreased.

FIG. 4 is a diagram of the electronic mechanical brake apparatus according to an embodiment of this application. The electronic mechanical brake apparatus 210 includes a wheel-end controller 211, a brake motor 212, and an actuator 213. As shown in FIG. 4, the wheel-end controller 211 is configured to: receive a braking signal output by the controller 400, and output a control signal to control the brake motor 212. The brake motor 212 is configured to output a braking torque to drive the actuator 213. The actuator 213 is configured to drive, based on the braking torque output by the brake motor 212, a caliper to clamp a brake disc of a corresponding wheel.

In an embodiment, the wheel-end controller 211 in the electronic mechanical brake apparatus 210 includes the controller 400 in the brake system 200.

In an embodiment, the controller 400 is a central controller in the electric vehicle 10, a vehicle control unit (vehicle control unit, VCU), or a domain control unit (domain control unit, DCU) in the electric vehicle 10.

In a traveling process of the electric vehicle, after the driver actively steps on the brake pedal so that a physical stroke of the brake pedal changes or the autonomous driving system automatically outputs a brake pedal electronic stroke signal to indicate a brake pedal stroke, the controller 400 outputs a braking control signal to the electronic mechanical brake apparatus 210 based on the corresponding brake pedal stroke, to control the brake motor in the electronic mechanical brake apparatus 210 to output a braking torque, so that the electric vehicle 10 decelerates. A larger brake pedal stroke indicates a larger braking torque output by the brake motor, a larger deceleration of the electric vehicle, and a faster decrease in a vehicle speed of the electric vehicle 10. Consequently, forward leaning of a driver and a passenger is more pronounced when the electric vehicle stops. Forward leaning means that the driver and the passenger lean toward a traveling direction of the electric vehicle. A forward leaning direction of forward traveling is a vehicle head direction. A forward leaning direction of reverse traveling is a vehicle tail direction.

When a braking mode of the electric vehicle 10 is emergency braking, braking efficiency and braking safety of the electric vehicle 10 need to be preferentially considered. In other words, when the braking mode of the electric vehicle 10 is emergency braking, the controller 400 needs to control the brake motor in the electronic mechanical brake apparatus 210 to output the braking torque indicated by the brake pedal stroke, so that the electric vehicle stops more quickly, and no more consideration is required for forward leaning of the driver and the passenger caused by an excessively large deceleration.

When the braking mode of the electric vehicle 10 is non-emergency braking, braking comfort and driving and ride experience of the electric vehicle 10 need to be considered. In other words, a deceleration of the electric vehicle 10 at a final braking stage needs to be decreased as much as possible, to relieve forward leaning of the driver and the passenger. In the method for relieving forward leaning during braking of a vehicle provided in embodiments of this application, at a final braking stage of non-emergency braking, the braking torque output by the electronic mechanical brake apparatus 210 is actively controlled to be less than the braking torque indicated by the brake pedal stroke, to further decrease the deceleration of the electric vehicle, relieve forward leaning of the driver and the passenger, and improve comfort of braking at the final braking stage of non-emergency braking.

In an embodiment, after the brake pedal stroke is increased at the final braking stage of non-emergency braking of the electric vehicle 10, the braking torque output by the electronic mechanical brake apparatus 210 may remain unchanged, or the braking torque output by the electronic mechanical brake apparatus 210 is increased but is still less than the braking torque indicated by the brake pedal stroke, so that the braking torque is adjusted based on an actual requirement while comfortable braking is performed.

In an embodiment, when a braking distance of the electric vehicle 10 is excessively long, the electronic mechanical brake apparatus 210 increases the output braking torque, to stop the electric vehicle more quickly, and avoid an excessively long braking distance of the electric vehicle.

In an embodiment, when the brake pedal stroke is increased at an excessively large change rate, the braking torque output by the electronic mechanical brake apparatus 210 is equal to the braking torque indicated by the brake pedal stroke. That the brake pedal stroke is increased at the excessively large change rate indicates that the electric vehicle 10 needs to be braked to stop as soon as possible. In this case, the electronic mechanical brake apparatus 210 outputs the braking torque indicated by the brake pedal stroke, to stop the vehicle in time, and avoid causing a safety accident.

In an embodiment, when the electric vehicle 10 performs non-emergency braking on a ramp, the braking torque output by the electronic mechanical brake apparatus 210 further needs to be adaptively adjusted based on a gradient of a road surface and the traveling direction of the electric vehicle 10, to offset impact of a weight of the electric vehicle 10 on the deceleration of the electric vehicle 10.

In an embodiment, when the electric vehicle 10 performs non-emergency braking in a turning condition, a braking torque output by an electronic mechanical brake apparatus 210 on a turning side needs to be greater than a braking torque output by an electronic mechanical brake apparatus 210 on the other side, to provide a torque for assisting steering for the electric vehicle 10, and help the electric vehicle 10 steer more quickly.

To facilitate understanding of the method for relieving forward leaning during braking, the controller, and the electric vehicle provided in embodiments of this application, the following describes the method for relieving forward leaning during braking, the controller, and the electric vehicle provided in embodiments of this application in combination with a first moment t₁, a second moment t₂, a third moment t₃, a fourth moment t₄, a fifth moment t₅, a sixth moment t₆, and a seventh moment t₇ in a braking process of the electric vehicle.

In a process in which the electric vehicle 10 performs non-emergency braking, if the deceleration of the electric vehicle 10 is greater than or equal to a first preset deceleration a1 and/or a vehicle speed of the electric vehicle is greater than a first preset vehicle speed V1, it indicates that the electric vehicle 10 is not at the final braking stage. In the braking process of the electric vehicle 10, if the deceleration of the electric vehicle 10 is less than or equal to the first preset deceleration a1 and the vehicle speed of the electric vehicle is less than the first preset vehicle speed V1, it indicates that the electric vehicle 10 is at the final braking stage.

In a traveling process of the electric vehicle 10, after the driver actively steps on the brake pedal so that the physical stroke of the brake pedal changes or the autonomous driving system automatically outputs the brake pedal electronic stroke signal, if the braking torque output by the electronic mechanical brake apparatus 210 causes the deceleration of the electric vehicle 10 to be greater than 0.5g, it indicates that the electric vehicle is performing emergency braking. If the braking torque output by the electronic mechanical brake apparatus 210 causes the deceleration of the electric vehicle 10 to be within a range of 0.1g to 0.5g, it indicates that the electric vehicle 10 is performing non-emergency braking. Herein, g indicates a gravitational acceleration. In addition, when the electric vehicle 10 starts to perform non-emergency braking, the braking torque output by the electronic mechanical brake apparatus 210 is equal to the braking torque indicated by the brake pedal stroke.

In the final braking stage of the electric vehicle 10 during traveling, when the deceleration of the electric vehicle 10 is less than or equal to the first preset deceleration a1 and the vehicle speed of the electric vehicle 10 is less than or equal to the first preset vehicle speed V1 at the first moment t₁, for example, the first preset deceleration a1 is 4 m/s² and the first preset vehicle speed V1 is 12 km/h, the controller 400 controls the electronic mechanical brake apparatus 210 to output a first braking torque T1. The first braking torque T1 is less than a braking torque indicated by a brake pedal stroke of the electric vehicle 10 at the first moment t₁.

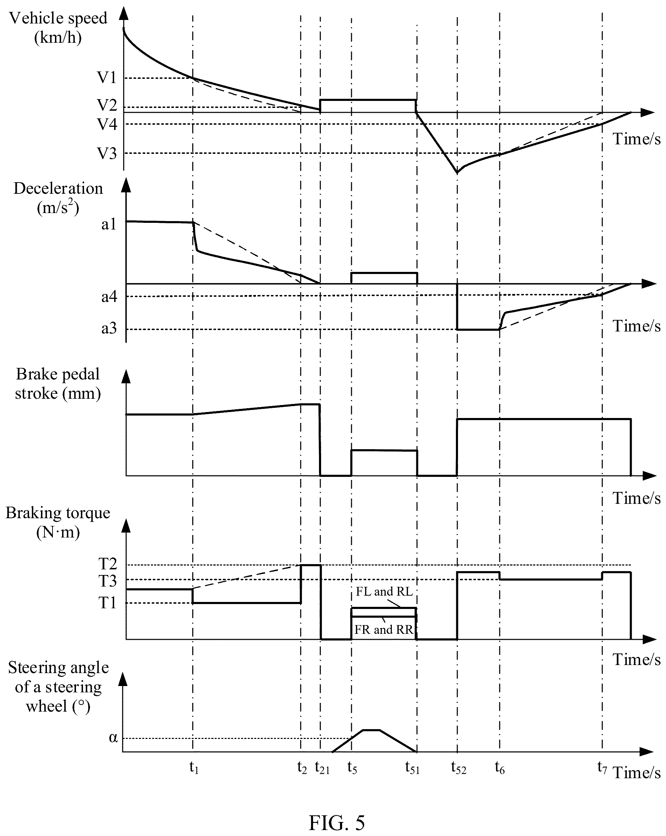

FIG. 5 is a diagram of a braking control process of the electric vehicle according to an embodiment of this application.

As shown in FIG. 5, in an embodiment, at the first moment t₁ during non-emergency braking of the electric vehicle 10, if the deceleration of the electric vehicle 10 is less than or equal to the first preset deceleration a1 and the vehicle speed of the electric vehicle 10 is less than or equal to the first preset vehicle speed V1, it indicates that the electric vehicle 10 is at the final braking stage. In this case, if the braking torque output by the electronic mechanical brake apparatus 210 remains unchanged when the brake pedal stroke remains unchanged, the deceleration when the electric vehicle 10 stops suddenly changes from a specific value to zero, and forward leaning amplitudes of the driver and the passenger are large. In FIG. 5, a positive or negative value of the vehicle speed or the deceleration indicates a traveling direction. Forward traveling corresponds to a positive value, and reverse traveling corresponds to a negative value. Dashed lines in change trends of the vehicle speed and the deceleration indicate change trends when the method for relieving forward leaning in embodiments of this application is not used.

The first braking torque T1, the first preset deceleration a1, and the first preset vehicle speed V1 are quantified values set based on an actual road condition and a vehicle condition. The first braking torque T1, the first preset deceleration a1, and the first preset vehicle speed V1 may be quantified based on a plurality of parameters including the vehicle speed of the electric vehicle, the weight of the electric vehicle, an adhesion coefficient of a road surface, a gradient of a road surface, and a steering angle of a steering wheel. In addition, the first braking torque T1, the first preset deceleration a1, and the first preset vehicle speed V1 may be further quantified based on different vehicle models. Details are not described in embodiments of this application.

In this embodiment of this application, at the final braking stage of non-emergency braking, the controller 400 can actively decrease the braking torque output by the electronic mechanical brake apparatus 210, to appropriately decrease the deceleration of the electric vehicle 10, so that a speed of a vehicle body and a speed of a chassis can be kept synchronous, to reduce forward leaning amplitudes of the driver and the passenger.

In an embodiment, when controlling the electronic mechanical brake apparatus 210 to output the first braking torque T1, the controller 400 may rapidly decrease the braking torque indicated by the brake pedal stroke at the first moment t₁ to the first braking torque T1, or gradually decrease the braking torque indicated by the brake pedal stroke at the first moment t₁ to the first braking torque T1. This is not specifically limited in embodiments of this application. In addition, the first braking torque T1 may further be gradually decreased with an increase of braking time, so that the deceleration can be smoothly decreased.

When the deceleration of the electric vehicle 10 is excessively large, it indicates that the electric vehicle 10 needs to be braked to stop in time. In this case, for safety consideration, the controller 400 in the electric vehicle 10 needs to control the brake motor 212 in the electronic mechanical brake apparatus 210 to output the braking torque indicated by the brake pedal stroke. When the deceleration of the electric vehicle is excessively small, controlling, by the controller 400, the brake motor 212 in the electronic mechanical brake apparatus 210 to output the braking torque indicated by the brake pedal stroke does not cause forward leaning of the driver and the passenger. In this case, the electronic mechanical brake apparatus 210 does not need to control the output braking torque to be less than the braking torque indicated by the brake pedal stroke.

In an embodiment, to more effectively improve comfort of the driver and the passenger in a non-emergency braking process, when the deceleration of the electric vehicle 10 is less than or equal to the first preset deceleration a1 and greater than a relatively small deceleration, the controller 400 controls the brake motor 212 in the electronic mechanical brake apparatus 210 to output a braking torque less than the braking torque indicated by the brake pedal stroke. For example, when the deceleration of the electric vehicle 10 is within a range of [0.05g, 0.3g], the brake motor 212 in the electronic mechanical brake apparatus 210 is controlled to output a braking torque less than the braking torque indicated by the brake pedal stroke. In addition, to ensure safety of the electric vehicle 10, when the vehicle speed of the electric vehicle 10 is excessively high, the brake motor 212 in the electronic mechanical brake apparatus 210 needs to be controlled to output the braking torque indicated by the brake pedal stroke. Therefore, when the vehicle speed of the electric vehicle 10 is low, the brake motor 212 in the electronic mechanical brake apparatus 210 needs to be controlled to output a braking torque less than the braking torque indicated by the brake pedal stroke. For example, the foregoing strategy is executed when the vehicle speed of the electric vehicle 10 is less than 12 km/h.

It should be understood that the foregoing value range of the deceleration and the threshold of the vehicle speed are merely an example of an implementation provided in this application. In specific implementation, the value range of the deceleration and the threshold of the vehicle speed may alternatively be quantified based on an actual road condition and a vehicle condition. Details are not described in embodiments of this application.

Still as shown in FIG. 5, after the first moment t₁, the brake pedal stroke of the electric vehicle 10 is increased. At the second moment t₂ after the first moment t₁, the vehicle speed of the electric vehicle 10 is less than or equal to a second preset speed V2. The controller 400 controls the electronic mechanical brake apparatus 210 to output a second braking torque T2. The second braking torque T2 is equal to a braking torque indicated by the brake pedal stroke at the second moment t₂. The second preset speed V2 is less than the first preset speed V1. The brake pedal stroke of the electric vehicle 10 is increased from the first moment t₁ to the second moment t₂. The braking torque output by the electronic mechanical brake apparatus 210 under control of the controller 400 is still less than a braking torque indicated by the brake pedal stroke at a corresponding moment (as shown by a dashed line in FIG. 5).

In this embodiment of this application, the second preset speed V2 is set to a very low speed, and the second preset speed V2 is usually less than the first preset speed V1. For example, the first preset speed V1 is 12 km/h, and the second preset speed V2 is 1 km/h. If the vehicle speed of the electric vehicle 10 is less than or equal to the second preset speed V2 at the second moment t₂, it indicates that the vehicle speed is already low, and a forward leaning amplitude of the vehicle body is also very small. In this case, for braking safety, the controller 400 actively controls, at the second moment t₂, the braking torque output by the electronic mechanical brake apparatus 210 to be equal to the braking torque indicated by the brake pedal stroke, so that the electric vehicle 10 can be braked to stop in time while relieving forward leaning of the driver and the passenger. In the braking process, the drive motor 120 outputs, with rotation of the wheel, a torque opposite to a rotation direction of the wheel to perform regenerative braking on the electric vehicle. Therefore, the deceleration of the electric vehicle 10 is gradually decreased.

It should be understood that the first preset speed V1 and the second preset speed V2 need to be quantified based on a specific road condition and a specific vehicle condition during specific implementation. Values are not specifically limited in embodiments of this application.

In an embodiment, when the electric vehicle 10 is still in a traveling condition after the second moment t₂, and a left steering angle of the steering wheel of the electric vehicle 10 is greater than a first preset angle α at the fifth moment t₅ after the second moment t₂, for example, α is set to 3°, the controller 400 controls a braking torque output by an electronic mechanical brake apparatus 210 on a left side of the electric vehicle 10 to be greater than a braking torque output by an electronic mechanical brake apparatus 210 on a right side of the electric vehicle 10.

If the left steering angle of the steering wheel of the electric vehicle 10 is greater than the first preset steering angle α (for example, 3°) at the fifth moment t₅ after the second moment t₂, it indicates that the electric vehicle 10 needs to steer left. In this case, if the braking torque output by the electronic mechanical brake apparatus 210 on the left side (namely, the left front wheel FL and the left rear wheel RL) of the electric vehicle 10 is the same as the braking torque output by the electronic mechanical brake apparatus 210 on the right side (namely, the right front wheel FR and the right rear wheel RR) of the electric vehicle 10, the electric vehicle 10 can only slowly steer based on a steering angle of the front wheel, resulting in low steering efficiency of the electric vehicle 10.

Still as shown in FIG. 5, the vehicle speed of the electric vehicle 10 is decreased to 0 at a moment t₂₁ after the second moment t₂, and in a process in which the electric vehicle 10 travels at a low speed, the left steering angle of the steering wheel of the electric vehicle 10 is greater than the first preset steering angle α at the moment t₅ after the moment t₂₁. The controller 400 controls, based on the brake pedal stroke, the braking torque output by the electronic mechanical brake apparatus 210 on the left side (namely, the left front wheel FL and the left rear wheel RL) of the electric vehicle 10 to be greater than the braking torque output by the electronic mechanical brake apparatus 210 on the right side (namely, the right front wheel FR and the right rear wheel RR) of the electric vehicle 10.

In this embodiment of this application, when the left steering angle of the steering wheel of the electric vehicle 10 is greater than the first preset steering angle α at the fifth moment t₅ after the second moment t₂, the controller 400 actively controls the braking torque output by the electronic mechanical brake apparatus 210 on the left side to be greater than the braking torque output by the electronic mechanical brake apparatus 210 on the right side, to provide a torque for assisting steering for the electric vehicle 10, and help the electric vehicle 10 complete steering more quickly.

Further, when the electric vehicle 10 performs braking, braking torques output by electronic mechanical brake apparatuses 210 of two front wheels and braking torques output by electronic mechanical brake apparatuses 210 of two rear wheels are usually allocated proportionally, so that the braking torques output by the electronic mechanical brake apparatuses 210 of the two front wheels are different from the braking torques output by the electronic mechanical brake apparatuses 210 of the two rear wheels. For example, when the electric vehicle 10 performs braking in a process of traveling forward, because a center of gravity of the electric vehicle 10 shifts forward, the braking torques output by the electronic mechanical brake apparatuses 210 of the two front wheels are greater than the braking torques output by the electronic mechanical brake apparatuses 210 of the two rear wheels. When the electric vehicle 10 performs braking in a process of reverse traveling, because the center of gravity of the electric vehicle 10 shifts backward, the braking torques output by the electronic mechanical brake apparatuses 210 of the two front wheels are less than the braking torques output by the electronic mechanical brake apparatuses 210 of the two rear wheels.

Therefore, in the braking process of the electric vehicle 10, in a process in which the braking torque output by the electronic mechanical brake apparatus 210 is controlled to be less than the braking torque indicated by the brake pedal stroke, the braking torques output by the electronic mechanical brake apparatus 210 of the two front wheels and the braking torques output by the electronic mechanical brake apparatus 210 of the two rear wheels also need to meet the foregoing requirements, to smoothly and comfortably brake the electric vehicle 10.

Based on a same principle, when the left steering angle of the steering wheel is greater than the first preset angle α before the final braking stage of non-emergency braking of the electric vehicle 10, the controller 400 may alternatively control the braking torque output by the electronic mechanical brake apparatus 210 on the left side to be greater than the braking torque output by the electronic mechanical brake apparatus 210 on the right side, to help the electric vehicle 10 complete steering more quickly.

It should be noted that, when the electric vehicle 10 steers, the controller 400 controls the electronic mechanical brake apparatuses 210 on the left side and the right side to output the braking torques based on a combination of a brake stroke and a steering angle or based on only a steering angle, namely, a brake stroke of zero. Keeping the braking torques output by the electronic mechanical brake apparatuses 210 on the left side and the right side within a specific difference range can help steering. The braking torques are specifically generated based on steering calibration of the electric vehicle 10, and have no fixed value.

In an embodiment, when the electric vehicle 10 is in a reverse braking condition after the fifth moment t₅, and the deceleration of the electric vehicle 10 is less than or equal to a third preset deceleration a3 and the vehicle speed of the electric vehicle 10 is less than a third preset vehicle speed V3 at the sixth moment t₆ after the fifth moment t₅, the controller 400 controls a third braking torque T3 output by the electronic mechanical brake apparatus 210. The third braking torque T3 is less than a braking torque indicated by the brake pedal stroke at the sixth moment t₆ and is greater than the first braking torque T1.

Still as shown in FIG. 5, at a moment t₅₁ after the fifth moment t₅, the vehicle speed of the electric vehicle 10 is decreased to zero, and the electric vehicle 10 starts to reverse after the steering wheel is returned to a neutral position. When the driver steps on the brake pedal or the autonomous driving system outputs a brake pedal electronic stroke signal at a moment t₅₂ after the moment t₅₁, and the controller 400 controls the braking torque output by the electronic mechanical brake apparatus 210 to be equal to a braking torque indicated by a corresponding brake pedal stroke. When the deceleration of the electric vehicle 10 is less than or equal to the third preset deceleration a3 and the vehicle speed of the electric vehicle 10 is less than the third preset vehicle speed V3 at the sixth moment t₆ after the moment t₅₂, the controller 400 controls the third braking torque T3 output by the electronic mechanical brake apparatus 210.

If the deceleration of the electric vehicle 10 is less than or equal to the third preset deceleration a3 and the vehicle speed of the electric vehicle 10 is less than the third preset vehicle speed V3 at the sixth moment t₆, it indicates that the electric vehicle 10 is at the final braking stage of non-emergency braking. In this case, if the braking torque output by the electronic mechanical brake apparatus 210 remains unchanged when the brake pedal stroke remains unchanged, the deceleration when the electric vehicle 10 stops suddenly changes from a specific value to zero, and forward leaning amplitudes of the driver and the passenger are large.

In this embodiment of this application, when the electric vehicle 10 is in the reverse braking condition, at the final braking stage of non-emergency braking, the controller 400 can also actively decrease the braking torque output by the electronic mechanical brake apparatus 210, to appropriately decrease the deceleration of the electric vehicle 10, so that the speed of the vehicle body and the speed of the chassis can be kept synchronous, to reduce forward leaning amplitudes of the driver and the passenger.

In addition, because the driver has a poor field of view in a reverse traveling process, the third braking torque T3 output by the electronic mechanical brake apparatus 210 is greater than the first braking torque T1 for comfortable braking during forward traveling, to stop the electric vehicle 10 more quickly, to avoid a safety accident caused by an excessively long braking distance of the electric vehicle. In addition, the third preset deceleration a3 may be appropriately greater than the first preset deceleration a1, and the third preset vehicle speed V3 may be appropriately greater than the first preset vehicle speed V1.

Certainly, during braking in the reverse traveling process, when a distance between the electric vehicle 10 and another obstacle in the traveling direction is large, the third braking torque T3 may be equal to the first braking torque T1, to improve driving and ride experience.

It should be understood that the third preset deceleration a3 may be set based on actual requirements from the perspective of vehicle safety and driving and ride experience. This is not specifically limited in embodiments of this application.

In an embodiment, when the deceleration of the electric vehicle 10 is less than or equal to a fourth preset deceleration a4 at the seventh moment t₇ after the sixth moment t₆, for example, the fourth preset deceleration a4 is set to 1.5 m/s², the controller 400 controls the braking torque output by the electronic mechanical brake apparatus 210 to be equal to a braking torque indicated by the brake pedal stroke at the seventh moment t₇.

Still as shown in FIG. 5, if the deceleration of the electric vehicle 10 is less than or equal to the fourth preset deceleration a4 at the seventh moment t₇ after the sixth moment t₆, it indicates that the electric vehicle 10 is close to stopping. In this case, to ensure braking safety, the braking distance of the electric vehicle 10 needs to be prevented from becoming excessively long. In this embodiment of this application, the controller 400 actively controls the braking torque output by the electronic mechanical brake apparatus 210 to be equal to the braking torque indicated by the brake pedal stroke at the seventh moment t₇, so that the electric vehicle 10 can be braked to stop in time while relieving forward leaning of the driver and the passenger, to prevent the braking distance of the electric vehicle 10 from becoming excessively long.

In an embodiment, still as shown in FIG. 5, the controller 400 may control, at any moment between the first moment t₁ and the second moment t₂, the braking torque output by the electronic mechanical brake apparatus 210 to be equal to the first braking torque T1.

An increase of the brake pedal stroke after the first moment t₁ indicates that the electronic mechanical brake apparatus 210 needs to output a larger braking torque. However, because the electric vehicle 10 is at the final braking stage of non-emergency braking, even if the braking torque output by the electronic mechanical brake apparatus 210 remains unchanged at the first braking torque T1, the vehicle can be braked to stop. Therefore, controlling, by the controller 400 at any moment between the first moment t₁ and the second moment t₂, the braking torque output by the electronic mechanical brake apparatus 210 to be equal to the first braking torque T1 simplifies output control of the braking torque and facilitates implementation of a control manner.

When the brake pedal stroke is increased after the first moment t₁, if the braking torque output by the electronic mechanical brake apparatus 210 remains unchanged at the first braking torque T1, the driver may feel that the vehicle cannot be braked to stop.

In an embodiment, the controller 400 controls, at any moment between the first moment t₁ and the second moment t₂, the braking torque output by the electronic mechanical brake apparatus 210 to be greater than the first braking torque T1 and less than a braking torque indicated by the brake pedal stroke at the corresponding same moment. The braking torque output by the electronic mechanical brake apparatus 210 is less than the second braking torque T2 at any moment between the first moment t₁ and the second moment t₂.

Based on this, output of the braking torque may be adjusted based on a feeling of driving and riding, to optimize deceleration control of the entire vehicle, and further ensure braking comfort.

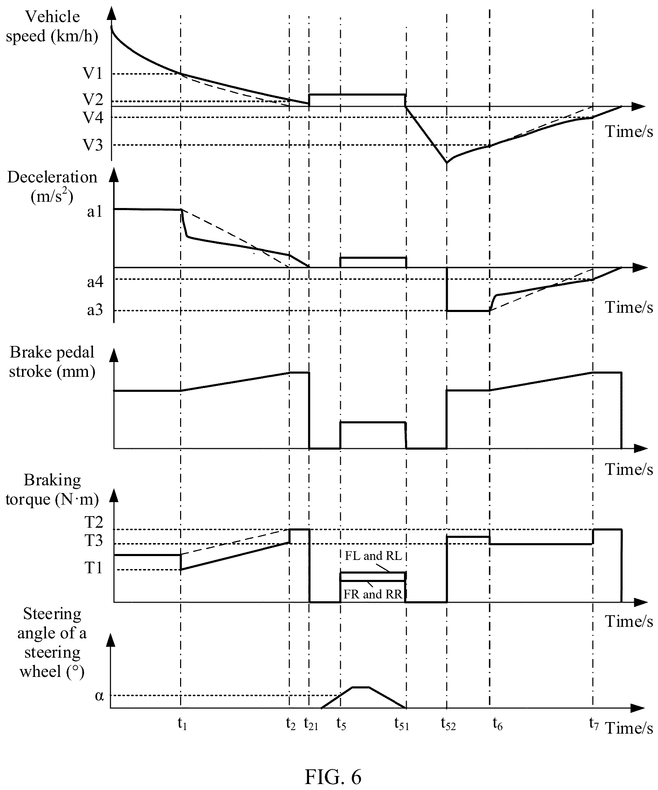

FIG. 6 is another diagram of a braking control process of the electric vehicle according to an embodiment of this application. As shown in FIG. 6, when the brake pedal stroke is increased after the first moment t₁ and an increase rate of the brake pedal stroke is less than a preset rate (that is, an increase slope of the brake pedal is greater than a preset slope), the controller 400 controls, from the first moment t₁ to the second moment t₂, the braking torque output by the electronic mechanical brake apparatus 210 to gradually increase, so that deceleration control of the entire vehicle changes linearly, to further ensure braking comfort. The increase rate of the brake pedal stroke being less than the preset rate indicates that the electric vehicle 10 does not need to perform emergency braking. Therefore, the braking torque output by the electronic mechanical brake apparatus 210 can still be controlled to be less than the braking torque indicated by the brake pedal stroke, to perform comfortable braking.

As shown in FIG. 6, when the brake pedal stroke is increased from the sixth moment t₆ to the seventh moment t₇ and the increase rate of the brake pedal stroke is less than the preset rate (that is, the increase slope of the brake pedal is greater than the preset slope), the controller 400 controls, from the sixth moment t₆ to the seventh moment t₇, the braking torque output by the electronic mechanical brake apparatus 210 to remain unchanged, so that the entire vehicle can decelerate more smoothly.

In an embodiment, when a traveling distance of the electric vehicle 10 from the first moment t₁ to the third moment t₃ is greater than a first preset distance S1 at the third moment t₃ after the first moment t₁ and before the second moment t₂, the controller 400 controls the electronic mechanical brake apparatus 210 to increase the output braking torque.

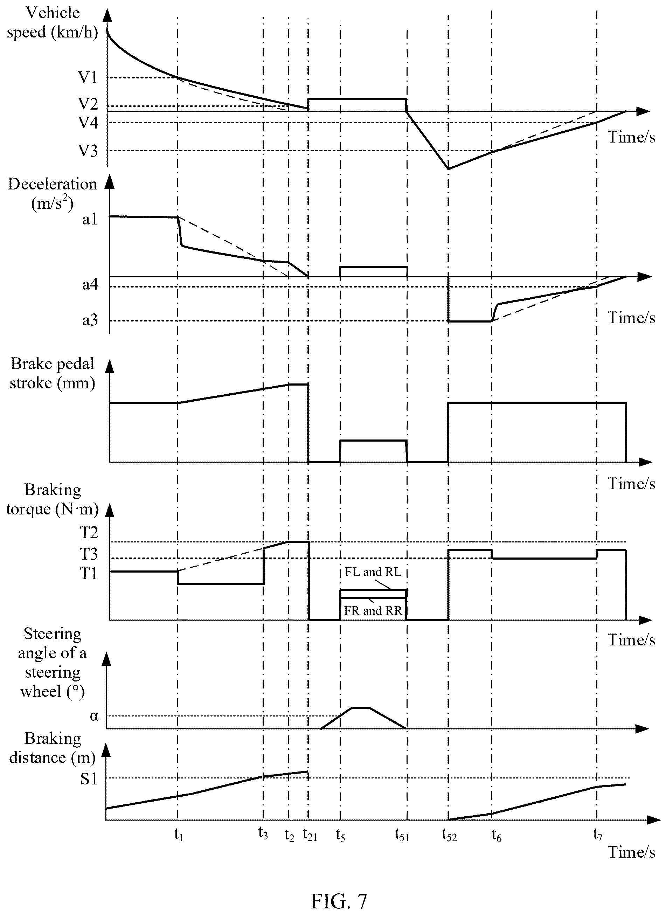

FIG. 7 is another diagram of a braking control process of the electric vehicle according to an embodiment of this application. As shown in FIG. 7, if a traveling distance of the electric vehicle 10 from the first moment t₁ to the third moment t₃ is greater than a first preset distance S1, it indicates that a braking distance of the electric vehicle 10 is excessively long. In this case, if the braking torque output by the electronic mechanical brake apparatus 210 remains unchanged, the braking distance may be excessively increased, and a safety accident is easily caused. Therefore, when the braking distance is excessively long, the controller 400 actively controls the electronic mechanical brake apparatus 210 to increase the output braking torque, to more quickly decelerate the electric vehicle 10 to stop, and avoid a safety accident caused by an excessively long braking distance.

The controller 400 may calculate, based on a vehicle speed, a weight, and a wheel diameter of a wheel of the electric vehicle 10, and an output characteristic of the braking torque output by the electronic mechanical brake apparatus 210, a theoretical traveling distance of the electric vehicle 10 at each moment at the final braking stage when comfort braking is not performed. The theoretical traveling distance may be used as a reference value for determining whether the braking distance of the electric vehicle 10 is excessively large, namely, the first preset distance S1. When a traveling distance of the electric vehicle 10 within a same time period after comfort braking is triggered in the braking process is greater than the first preset distance S1, it indicates that the braking distance of the electric vehicle 10 is excessively large, and the controller 400 needs to control the electronic mechanical brake apparatus 210 to increase the output braking torque.

In an embodiment, when controlling the electronic mechanical brake apparatus 210 to increase the output braking torque, the controller 400 may further adjust a rate at which the electronic mechanical brake apparatus 210 increases the output braking torque based on the traveling distance of the electric vehicle 10. For example, when the traveling distance of the electric vehicle 10 from the first moment t₁ to the third moment t₃ is greater than the first preset distance S1 but less than a second preset distance S2, the controller 400 controls the electronic mechanical brake apparatus 210 to increase the output braking torque at a first rate. When the traveling distance of the electric vehicle 10 from the first moment t₁ to the third moment t₃ is greater than the second preset distance S2, the controller 400 controls the electronic mechanical brake apparatus 210 to increase the output braking torque at a second rate. The second rate is greater than the first rate. It should be noted that the first preset distance S1 and the second preset distance S2 are not fixed values, but are a series of calculated values set based on a braking characteristic and a condition.

In the foregoing manner, at the final braking stage of non-emergency braking, when the traveling distance of the electric vehicle 10 is excessively large, the braking torque output by the electronic mechanical brake apparatus 210 can be adjusted more quickly based on the traveling distance, to perform braking more safely.

It should be understood that the foregoing manner of controlling the electronic mechanical brake apparatus 210 to increase the output braking torque is merely an example of an implementation provided in embodiments of this application. In specific implementation, the rate at which the electronic mechanical brake apparatus 210 increases the output braking torque may be quantified based on an actual requirement. This is not specifically limited in embodiments of this application.

In an embodiment, when a deceleration of the electric vehicle 10 is less than a second preset deceleration a2 at the fourth moment t₄ after the first moment t₁ and before the second moment t₂, for example, when the second preset deceleration a2 is set to 1.2 m/s², the controller 400 controls the braking torque output by the electronic mechanical brake apparatus 210 to be equal to a braking torque indicated by the brake pedal stroke at the fourth moment t₄. The second preset deceleration a2 is less than the first preset deceleration a1.

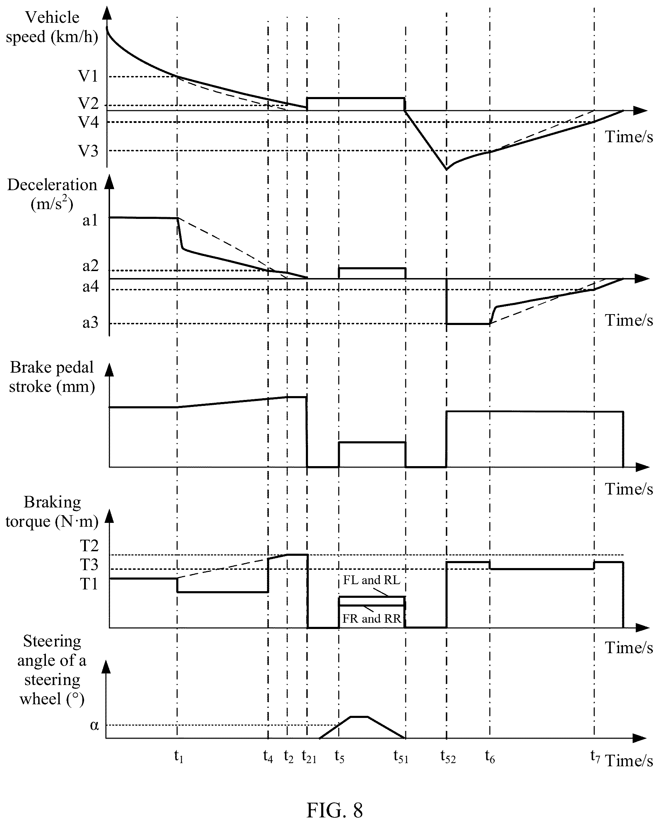

FIG. 8 is another diagram of a braking control process of the electric vehicle according to an embodiment of this application. As shown in FIG. 8, if the deceleration of the electric vehicle 10 is less than the second preset deceleration a2 at the fourth moment t₄ after the first moment t₁ and before the second moment t₂, it indicates that the deceleration of the electric vehicle 10 is very small. In this case, the braking torque output by the electronic mechanical brake apparatus 210 does not cause forward leaning of the driver or passenger. Therefore, the controller 400 may control the braking torque output by the electronic mechanical brake apparatus 210 to be equal to the braking torque indicated by the brake pedal stroke at the fourth moment t₄, to decelerate the electric vehicle 10 to stop more quickly, and prevent the braking distance of the electric vehicle 10 from becoming excessively long.

In addition, in consideration that a field of view is poor in a reverse traveling process, to ensure braking safety in the reverse traveling process, the fourth preset deceleration a4 is greater than the second preset deceleration a2. It should be noted that the fourth preset deceleration a4 is greater than the second preset deceleration a2 means that an absolute value of the fourth preset deceleration a4 is greater than an absolute value of the second preset deceleration a2.

In an embodiment, when the vehicle speed of the electric vehicle 10 is greater than the first preset vehicle speed V1 at the first moment t₁, the controller 400 controls the braking torque output by the electronic mechanical brake apparatus 210 to be equal to the braking torque indicated by the brake pedal stroke of the electric vehicle 10 at the first moment t₁.

In this embodiment of this application, the vehicle speed of the electric vehicle 10 being greater than the first preset vehicle speed V1 indicates that the electric vehicle 10 is not at the final braking stage. In this case, the braking torque output by the electronic mechanical brake apparatus 210 being equal to the brake pedal stroke of the electric vehicle 10 can quickly decrease the vehicle speed of the electric vehicle 10, to avoid increasing the braking distance of the electric vehicle 10.

In an embodiment, when the change rate of the brake pedal stroke is greater than the first preset change rate at any moment between the first moment t₁ and the second moment t₂, the controller 400 controls the braking torque output by the electronic mechanical brake apparatus 210 to be equal to the braking torque indicated by the brake pedal stroke at the first moment.

In this embodiment of this application, when the change rate of the brake pedal stroke is excessively large at any moment between the first moment t₁ and the second moment t₂, it indicates that an emergency occurs between the first moment t₁ and the second moment t₂, for example, there is a pedestrian, a vehicle, or another obstacle in a traveling direction, and the driver steps on the brake pedal urgently or the autonomous driving system increases the brake pedal electronic stroke signal. In this case, the change rate of the brake pedal stroke is large, and the electric vehicle 10 needs to be braked to stop quickly to avoid a safety accident.

Therefore, the controller 400 controls the electronic mechanical brake apparatus 210 to output the braking torque indicated by the brake pedal stroke, to interrupt a comfort braking process and brake the vehicle to stop more quickly, to avoid a safety accident.

It should be understood that the first preset change rate may be a calibration value set based on a road condition and a vehicle condition during traveling of the electric vehicle 10. A value is not specifically limited in embodiments of this application.

In an embodiment, when a braking torque output by the electronic mechanical brake apparatus 210 between the first moment t₁ and the second moment t₂ is recovered to the braking torque indicated by the brake pedal stroke at the first moment, the braking torque may be increased at different torque increase rates based on the change rate of the brake pedal stroke. For example, when the change rate of the brake pedal stroke is greater than the first preset change rate but less than a second preset change rate, the braking torque is increased at a first rate to the braking torque indicated by the brake pedal stroke at the first moment. When the change rate of the brake pedal stroke is greater than the second preset change rate, the braking torque is increased at a second rate to the braking torque indicated by the brake pedal stroke at the first moment. The first rate is less than the second rate.

Based on this, the controller 400 can adjust the torque increase rate based on the change rate of the brake pedal stroke, to decrease a speed of the electric vehicle 10 more quickly while improving driving and ride experience.

In an embodiment, based on a same technical principle, when the change rate of the brake pedal stroke is greater than the first preset change rate at the first moment t₁, the controller 400 can alternatively control the braking torque output by the electronic mechanical brake apparatus 210 to be equal to the braking torque indicated by the brake pedal stroke at the first moment. Details are not described herein in embodiments of this application.

In an embodiment, when the electric vehicle 10 is in an uphill condition, and a gradient of a road surface on which the electric vehicle 10 travels is greater than a first preset gradient, the first braking torque T1 is controlled, at the first moment t₁, to be inversely proportional to the gradient of the road surface. When the electric vehicle 10 is in a downhill condition, and the gradient of the road surface on which the electric vehicle 10 travels is greater than a second preset gradient, the first braking torque T1 is controlled, at the first moment t₁, to be directly proportional to the gradient of the road surface. The first preset gradient and the second preset gradient have a same value, or the first preset gradient and the second preset gradient have different values.

When the electric vehicle 10 is in the uphill condition, the weight of the electric vehicle 10 increases resistance of the electric vehicle 10 to go uphill. As a result, the deceleration of the electric vehicle 10 is increased. In addition, a larger gradient of the road surface indicates greater resistance generated by the weight of the electric vehicle 10, and a faster increase rate of the deceleration. When the electric vehicle 10 is in the uphill condition at the first moment t₁, and the gradient of the road surface is greater than the first preset gradient, it indicates that the gradient of the road surface greatly affects the deceleration of the electric vehicle 10. In this case, if the braking torque output by the electronic mechanical brake apparatus 210 remains unchanged, the deceleration of the electric vehicle 10 is excessively large. As a result, the electric vehicle is braked to stop too quickly, causing forward leaning of the driver and the passenger. Therefore, in this embodiment of this application, the controller 400 actively decreases, in the uphill condition based on the gradient of the road surface on which the electric vehicle 10 travels, the braking torque output by the electronic mechanical brake apparatus 210, so that the deceleration of the electric vehicle 10 is decreased more smoothly.

Further, it should be noted that in the downhill condition, a larger gradient of the road surface indicates greater resistance generated by the weight of the electric vehicle 10. Therefore, when the gradient of the road surface when the electric vehicle 10 is in the uphill condition is greater than the first preset gradient, the controller 400 controls, at the first moment t₁, the first braking torque T1 to be inversely proportional to the gradient of the road surface, that is, a larger gradient of the road surface indicates a smaller first braking torque T1.

Based on this, the controller 400 can actively adjust a magnitude of the first braking torque T1 based on the gradient of the road surface on which the electric vehicle 10 travels when the electric vehicle 10 is in the uphill condition, to better perform comfortable braking on the electric vehicle 10.

In an embodiment, when the electric vehicle 10 is in the downhill condition, the weight of the electric vehicle 10 increases power of the electric vehicle 10 going downhill. As a result, the deceleration of the electric vehicle 10 is decreased. Specifically, a larger gradient of the road surface indicates greater power generated by the weight of the electric vehicle 10 and a faster decrease rate of the deceleration. When the electric vehicle 10 is in the downhill condition at the first moment t₁, and the gradient of the road surface is greater than the second preset gradient, it indicates that the gradient of the road surface greatly affects the deceleration of the electric vehicle 10. In this case, if the braking torque output by the electronic mechanical brake apparatus 210 remains unchanged, the deceleration of the electric vehicle 10 is decreased too fast. As a result, the electric vehicle 10 surges forward. Therefore, in this embodiment of this application, when the electric vehicle 10 is in the downhill condition, the braking torque output by the electronic mechanical brake apparatus 210 is actively increased at the first moment t₁ based on the gradient of the road surface on which the electric vehicle travels, so that the deceleration of the electric vehicle is decreased more smoothly.

Further, it should be noted that when the electric vehicle 10 is in the downhill condition, a larger gradient of the road surface indicates greater power provided by the weight of the electric vehicle 10. Therefore, when the gradient of the road surface is greater than the second preset gradient, the controller 400 controls, at the first moment t₁, the first braking torque T1 to be directly proportional to the gradient of the road surface, that is, a larger gradient of the road surface indicates a larger first braking torque T1.

Based on this, the controller 400 can actively adjust the magnitude of the first braking torque T1 based on the gradient of the road surface when the electric vehicle 10 is in the downhill condition, to better perform comfortable braking on the electric vehicle 10.

In an embodiment, to more accurately control the deceleration of the electric vehicle 10 in scenarios such as a flat road condition, the uphill condition, and the downhill condition, the controller 400 may control, based on quantified decelerations in various conditions, braking torques output by the electronic mechanical brake apparatus 210, so that after the braking torque output by the electronic mechanical brake apparatus 210 is decreased, the electric vehicle 10 can perform braking based on the quantified decelerations.

Further, it is considered that control precision of the actuator 213 in the electronic mechanical brake apparatus 210 may be different. Therefore, the controller 400 may adaptively adjust the quantified decelerations in various road conditions based on control precision of the actuator. For example, a target deceleration of the electric vehicle 10 in the flat road condition is a0. A quantified deceleration of the electric vehicle 10 in the flat road condition is a0*f. Herein, f is a compensation coefficient calibration value of the actuator.

In addition, it is considered that a deceleration of the electric vehicle 10 in the uphill condition and the downhill condition is affected by the weight of the electric vehicle 10. In an embodiment, a quantified deceleration in the uphill condition may be 2*g0*f. Herein, g0 indicates a gravity component of the electric vehicle 10 downward along a ramp in the uphill condition. A quantified deceleration in the downhill condition may be (a0+g0)*f.

It should be understood that the foregoing calculation manners of the quantified decelerations in the various road conditions are merely examples provided in embodiments of this application. During specific implementation, the quantified decelerations in the various road conditions may be adaptively adjusted in combination with a vehicle speed of the electric vehicle 10, a road bumping degree, a compression degree of a suspension, and the like. This is not specifically limited in embodiments of this application.

In an embodiment, when the electric vehicle 10 is in the uphill condition or the downhill condition and brakes, the electric vehicle 10 may slip. In this case, the controller 400 needs to actively and quickly increase the braking torque output by the electronic mechanical brake apparatus 210, to prevent the electric vehicle 10 from continuing to slip.

In an embodiment, when a slip rate of the wheel of the electric vehicle 10 is less than a first preset slip rate, the controller 400 controls, at the first moment t₁, the first braking torque T1 to be directly proportional to the slip rate of the wheel. In other words, when the slip rate of the wheel is less than the first preset slip rate, a larger slip rate of the vehicle indicates a larger first braking torque T1. When the slip rate of the wheel of the electric vehicle 10 is greater than or equal to the first preset slip rate, the controller 400 controls, at the first moment t₁, the braking torque output by the electronic mechanical brake apparatus 210 to be equal to the braking torque indicated by the brake pedal stroke at the first moment t₁.

When the slip rate of the wheel is less than the first preset slip rate, it indicates that the electric vehicle 10 travels on a high-adhesion road surface. In this case, an increase of the slip rate of the vehicle indicates a larger slip degree of the wheel, and the electronic mechanical brake apparatus 210 needs to output a larger braking torque to limit slip of the wheel. The slip rate of the wheel of the electric vehicle 10 being greater than or equal to the first preset slip rate indicates that the electric vehicle 10 travels on a low-adhesion road surface. In this case, the slip degree of the wheel needs to be quickly limited to avoid unbalance of the electric vehicle 10.

In this embodiment of this application, the controller 400 actively controls, based on the slip rate of the wheel, the braking torque output by the electronic mechanical brake apparatus 210 at the first moment t₁, to perform comfortable braking on the electric vehicle 10 more smoothly.

It should be further noted that, in an embodiment, when an adhesion coefficient of the road surface is suddenly increased from the first moment t₁ to the second moment t₂, for example, when the electric vehicle 10 travels from a low-adhesion road surface to a high-adhesion road surface, an increase of a friction coefficient between the electric vehicle 10 and the ground may increase a friction force between the electric vehicle 10 and the ground, to increase the braking force of the electric vehicle 10. In this case, if the braking torque output by the electronic mechanical brake apparatus 210 remains unchanged, the deceleration of the electric vehicle 10 may be suddenly increased, causing discomfort to the driver and the passenger. Therefore, correspondingly, when the adhesion coefficient of the road surface is suddenly increased at any moment from the first moment t₁ to the second moment t₂, the controller 400 controls the braking torque output by the electronic mechanical brake apparatus 210 to be less than the first braking torque T1. The control strategy may be triggered when a resolver signal of the electric vehicle is suddenly decreased or the vehicle speed is suddenly decreased.

In this embodiment of this application, when the adhesion coefficient of the road surface is suddenly increased at any moment from the first moment t₁ to the second moment t₂, the controller 400 actively controls the braking torque output by the electronic mechanical brake apparatus 210 to be less than the first braking torque T1, to avoid increasing the deceleration of the electric vehicle 10 by the friction force provided by the road surface, so as to ensure that the electric vehicle 10 performs braking more comfortably.

Based on a same principle, in an embodiment, when the adhesion coefficient of the road surface is suddenly decreased from the first moment t₁ to the second moment t₂, for example, when the electric vehicle 10 travels from a high-adhesion road surface to a low-adhesion road surface, a decrease of the friction coefficient between the electric vehicle 10 and the ground may decrease the friction force between the electric vehicle 10 and the ground, to decrease the braking force of the electric vehicle 10. In this case, if the braking torque output by the electronic mechanical brake apparatus 210 remains unchanged, the electric vehicle surges forward. The control strategy may be triggered when the resolver signal of the electric vehicle is suddenly increased or the vehicle speed is suddenly increased.

Therefore, correspondingly, when the adhesion coefficient of the road surface is suddenly decreased at any moment from the first moment t₁ to the second moment t₂, the controller 400 controls the braking torque output by the electronic mechanical brake apparatus 210 to be greater than the first braking torque T1 and less than the braking torque indicated by the brake pedal stroke. Based on this, when the electric vehicle 10 is braked in a comfortable manner, forward surging of the electric vehicle 10 caused by a sudden decrease of the adhesion coefficient can be avoided.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for relieving forward leaning during braking of a vehicle, wherein the method for relieving forward leaning during braking is used to control, at a final braking stage during traveling of the vehicle, an electronic mechanical brake apparatus of the vehicle to output a braking torque, and the method for relieving forward leaning during braking comprises:
at a first moment when a deceleration of the vehicle is less than or equal to a first preset deceleration and a vehicle speed of the vehicle is less than or equal to a first preset vehicle speed, controlling the electronic mechanical brake apparatus to output a first braking torque, wherein the first braking torque is less than a braking torque indicated by a brake pedal stroke of the vehicle at the first moment.

2. The method for relieving forward leaning during braking according to claim 1, wherein the method for relieving forward leaning during braking further comprises:
after the first moment the brake pedal stroke of the vehicle is increased, and at a second moment after the first moment, the vehicle speed of the vehicle is less than or equal to a second preset vehicle speed, controlling the electronic mechanical brake apparatus to output a second braking torque, wherein the second braking torque is equal to a braking torque indicated by the brake pedal stroke at the second moment, and the second preset vehicle speed is less than the first preset vehicle speed.

3. The method for relieving forward leaning during braking according to claim 2, wherein the method for relieving forward leaning during braking further comprises:
controlling, at any moment between the first moment and the second moment, the braking torque output by the electronic mechanical brake apparatus to be equal to the first braking torque; or
controlling, at any moment between the first moment and the second moment, the braking torque output by the electronic mechanical brake apparatus to be greater than the first braking torque and less than a braking torque indicated by the brake pedal stroke at a corresponding same moment.

4. The method for relieving forward leaning during braking according to claim 2 or 3, wherein the method for relieving forward leaning during braking further comprises:
at a third moment after the first moment and before the second moment, a traveling distance of the vehicle from the first moment to the third moment is greater than a first preset distance, controlling the electronic mechanical brake apparatus to increase the output braking torque.

5. The method for relieving forward leaning during braking according to any one of claims 2 to 4, wherein the method for relieving forward leaning during braking further comprises:
at a fourth moment after the first moment and before the second moment, the deceleration of the vehicle is less than or equal to a second preset deceleration, controlling the braking torque output by the electronic mechanical brake apparatus to be equal to a braking torque indicated by the brake pedal stroke at the fourth moment, wherein the second preset deceleration is less than the first preset deceleration.

6. The method for relieving forward leaning during braking according to any one of claims 1 to 5, wherein the method for relieving forward leaning during braking further comprises:
at the first moment when the vehicle speed of the vehicle is greater than the first preset vehicle speed, controlling the braking torque output by the electronic mechanical brake apparatus to be equal to the braking torque indicated by the brake pedal stroke of the vehicle at the first moment.

7. The method for relieving forward leaning during braking according to any one of claims 2 to 6, wherein the method for relieving forward leaning during braking further comprises:
at any moment between the first moment and the second moment, a change rate of the brake pedal stroke is greater than a first preset change rate, controlling the braking torque output by the electronic mechanical brake apparatus to be equal to the braking torque indicated by the brake pedal stroke at the first moment.

8. The method for relieving forward leaning during braking according to claim 1, wherein the method for relieving forward leaning during braking further comprises:
at the first moment when a change rate of the brake pedal stroke is greater than a first preset change rate, controlling the braking torque output by the electronic mechanical brake apparatus to be equal to the braking torque indicated by the brake pedal stroke at the first moment.

9. The method for relieving forward leaning during braking according to any one of claims 1 to 8, wherein the method for relieving forward leaning during braking further comprises:
the vehicle is in an uphill condition and a gradient of a road surface on which the vehicle travels is greater than a first preset gradient, controlling, at the first moment, the first braking torque to be inversely proportional to the gradient of the road surface; or
the vehicle is in a downhill condition and the gradient of the road surface on which the vehicle travels is greater than a second preset gradient, controlling, at the first moment, the first braking torque to be directly proportional to the gradient of the road surface.

10. The method for relieving forward leaning during braking according to any one of claims 1 to 9, wherein the method for relieving forward leaning during braking further comprises:
a slip rate of a wheel of the vehicle is less than a first preset slip rate, controlling, at the first moment, the first braking torque to be directly proportional to the slip rate of the wheel; or
the slip rate of the wheel of the vehicle is greater than or equal to the first preset slip rate, controlling, at the first moment, the braking torque output by the electronic mechanical brake apparatus to be equal to the braking torque indicated by the brake pedal stroke at the first moment.

11. The method for relieving forward leaning during braking according to any one of claims 2 to 10, wherein the method for relieving forward leaning during braking further comprises:
after the second moment the vehicle is in a traveling condition, and at a fifth moment after the second moment, a left steering angle of a steering wheel of the vehicle is greater than a first preset steering angle, controlling a braking torque output by the electronic mechanical brake apparatus on a left side of the vehicle to be greater than a braking torque output by the electronic mechanical brake apparatus on a right side of the vehicle.

12. The method for relieving forward leaning during braking according to claim 11, wherein the method for relieving forward leaning during braking further comprises:
after the fifth moment the vehicle is in a reverse braking condition, and at a sixth moment after the fifth moment, the deceleration of the vehicle is less than or equal to a third preset deceleration and the vehicle speed of the vehicle is less than a third preset vehicle speed, controlling a third braking torque output by the electronic mechanical brake apparatus, wherein the third braking torque is less than a braking torque indicated by the brake pedal stroke at the sixth moment and is greater than the first braking torque.

13. The method for relieving forward leaning during braking according to claim 12, wherein the method for relieving forward leaning during braking further comprises:
at a seventh moment after the sixth moment, the deceleration of the vehicle is less than a fourth preset deceleration, controlling the braking torque output by the electronic mechanical brake apparatus to be equal to a braking torque indicated by the brake pedal stroke at the seventh moment.

14. A controller, wherein the controller is configured to implement the method for relieving forward leaning during braking according to any one of claims 1 to 13, and the controller is configured to: communicatively connect to the electronic mechanical brake apparatus of the vehicle, and control a brake motor of the electronic mechanical brake apparatus to output a braking torque.

15. A vehicle, wherein the vehicle performs brake control by using the method for relieving forward leaning during braking according to any one of claims 1 to 13.
